# FASCICULE DE BREVET EUROPEEN

(11) **EP 4 642 611 B1**
(45) Date de publication et mention de la délivrance du brevet: **11.11.2026**
(21) Numéro de dépôt: 23822022.2
(22) Date de dépôt: 13.12.2023
(51) Int. Cl.: B29C 49/78, B29C 49/64, B29C 49/68, B29C 49/06, B29C 49/12, B29C 49/36, B29K 67/00, B29L 31/00

(54) **PROCEDE DE COMMANDE D'UNE STATION DE CHAUFFAGE**
VERFAHREN ZUR STEUERUNG EINER HEIZSTATION
METHOD FOR CONTROLLING A HEATING STATION

(30) Priorité: 26.12.2022 FR 2214506
(43) Date de publication de la demande: 05.11.2025
(73) Titulaire: Sidel Participations, 76930 Octeville-sur-Mer (FR)
(72) Inventeur: FEUILLOLEY, Guy, 76930 Octeville-sur-Mer (FR)
(74) Mandataire: Sidel Group
(86) Numéro de dépôt international: PCT/EP2023/085481
(87) Numéro de publication internationale: WO 2024/141263

(56) Documents cités:
- EP-A1- 4 063 833
- WO-A1-2007/031194
- FR-A1- 3 074 714
- US-A1- 2009 261 513
- US-A1- 2020 307 064

## Description

### Domaine technique de l'invention

L'invention concerne un procédé de commande d'une station de chauffage d'une installation de fabrication de récipients par formage, notamment par étirage-soufflage, de préformes en matériau thermoplastique, les préformes étant transportées le long d'un trajet de production qui traverse une zone de chauffage dans laquelle les préformes sont exposées à un rayonnement électromagnétique chauffant à spectre continu, ledit spectre s'étendant au moins en partie dans le domaine de la lumière visible. De tels procédés et dispositifs selon l'art antérieur sont décrits dans les documents EP4063833A1, US2009/261513A1, FR3074714A1, WO2007/031194A1 et US2020/307064A1.

### Arrière-plan technique

Il est connu de fabriquer des récipients par formage, notamment par étirage-soufflage, de préformes en matériau thermoplastique. Le matériau formant les préformes est généralement dans un état amorphe qui n'est pas apte à permettre leur formage à froid. Préalablement à l'opération de formage, les préformes sont donc chauffées à une température supérieure ou égale à une température de transition vitreuse qui permet leur conformation en récipient final.

Plus particulièrement, les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est destiné à subir une déformation relativement importante pour le conformer en récipient lors d'une étape de formage.

Pour cette raison il est préférable que seul le corps de la préforme soit chauffé à une température de consigne qui est supérieure à la température de transition vitreuse, le col demeurant à une température inférieure à ladite température de transition vitreuse pour éviter sa déformation pendant la fabrication du récipient.

Par ailleurs, la température de consigne ne doit pas non plus dépasser une température de cristallisation qui est supérieure à la température de transition vitreuse. Au-delà de cette température de cristallisation, le matériau thermoplastique se cristallise et ne présente plus les propriétés mécaniques permettant de réaliser un formage de qualité requise.

La fabrication de récipients en grande série est réalisée dans une installation de production dans laquelle les préformes défilent le long d'un trajet de production prédéterminé. Chaque préforme est prise en charge par des moyens de convoyage. Un tel moyen de convoyage peut être formé par un convoyeur à rail le long duquel les préformes sont libres de venir au contact les unes des autres ou un convoyeur qui comporte des organes de préhension de chaque préforme individuellement.

L'installation de production comporte une station de chauffage qui permet, lors d'une étape de chauffage, de rendre malléable le corps de la préforme par chauffage à la température de consigne. Lors de l'étape de chauffage, chaque préforme est exposée à un rayonnement chauffant lors de son déplacement. La puissance du rayonnement chauffant est commandée de manière à permettre de chauffer le corps des préformes à la température de consigne. L'installation de production comporte aussi une station de formage qui est agencée en aval de la station de chauffage selon le sens de circulation des préformes dans l'installation de production. Lors de l'étape de formage, la préforme chaude est placée dans une unité de formage, par exemple dans un moule de la station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule. Généralement, l'injection de fluide sous pression est précédée et/ou accompagnée d'un étirage axial de la préforme, notamment au moyen d'une tige d'étirage insérée dans la préforme. De manière connue, le corps est ainsi soumis à un étirage biaxial. Lors de son passage dans la station de chauffage, chaque préforme est généralement exposée à un rayonnement chauffant de spectre continu qui permet de chauffer le matériau thermoplastique. La température à laquelle les préformes sont chauffées dépend généralement du facteur d'absorption (A) de la préforme pour les longueurs d'ondes du rayonnement chauffant. Le facteur d'absorption (A) est parfois désigné par son nom anglais d'« absorptance ».

Le facteur d'absorption (A) est défini comme étant le rapport entre flux de rayonnement chauffant absorbé et le flux de rayonnement chauffant incident. Le flux de rayonnement chauffant absorbé provoque une élévation de température du matériau thermoplastique composant la préforme. Le facteur d'absorption (A) de la préforme permet ainsi de connaître l'élévation de température d'une préforme en fonction de l'intensité du rayonnement infrarouge et de la durée d'exposition audit rayonnement. Moins d'énergie est nécessaire pour chauffer une préforme présentant un facteur d'absorption (A) élevé par rapport à une préforme présentant un facteur d'absorption (A) plus faible. Le facteur d'absorption (A) peut être déduit de deux autres paramètres appelés le facteur de transmission (T) de la préforme ainsi que de son facteur de réflexion (R).

Le facteur de transmission (T), parfois appelée « transmittance », est définie comme le rapport entre le flux de rayonnement chauffant transmis à travers au moins une paroi de la préforme et le flux de rayonnement chauffant incident.

Le facteur de réflexion (R), aussi appelée réflectance, est définie comme étant le rapport entre le flux de rayonnement chauffant réfléchie par la préforme et le flux de rayonnement chauffant incident. La réflectance (R) est par exemple calculée en fonction de l'indice de réfraction (n) du matériau thermoplastique selon la formule suivante : $R = {\left[\left(n-1\right)/\left(n+1\right)\right]}^{2}$ dans laquelle la valeur « 1 » correspond à l'indice de réfraction de l'air.

Ces trois facteurs dépendent de la longueur d'onde du rayonnement considéré.

Le rayonnement chauffant s'étend au moins en partie dans le domaine de l'infrarouge proche, car il est connu que les matériaux thermoplastiques, tel que le PET, absorbent très facilement ce type de rayonnement. La longueur d'onde considérée pour définir le facteur de transmission de la préforme est donc généralement prise dans le domaine de l'infrarouge proche.

Ces trois facteurs sont liés entre eux par l'équation suivante : $A = 1 - R - T$

Le facteur de transmission dépend de la longueur d'onde du rayonnement qui le traverse. Ainsi, une préforme parfaitement transparente présente un facteur de transmission proche de 100% pour des longueurs d'onde du domaine de la lumière visible, tandis qu'elle présente un facteur de transmission significativement plus faible pour un rayonnement présentant une longueur d'onde dans le domaine de l'infrarouge proche. Cela traduit le fait que la préforme peut être chauffée par des rayonnements appartenant au domaine de l'infrarouge proche, tandis qu'un rayonnement dans le domaine de la lumière visible n'aura qu'une influence négligeable sur la température de la préforme même à des puissances élevées.

Il arrive que les préformes soient réalisées en un matériau présentant une teinte.

Cette teinte peut être obtenue de manière intentionnelle par l'adjonction de colorant pour teindre la préforme en une couleur voulue afin d'obtenir un récipient coloré.

Cette teinte peut aussi être subie de manière involontaire et non maîtrisée, par exemple lorsque la préforme est réalisée en un matériau plastique constitué au moins en partie de matériau plastique recyclé. C'est par exemple le cas lorsque la préforme est réalisée en polyéthylène téréphtalate recyclé (rPET). Dans ce cas, la préforme présente une teinte plus ou moins foncée en fonction de la qualité et de la quantité de matériau recyclé incorporé dans la composition du matériau thermoplastique qui la constitue.

L'inventeur a constaté que dans ces deux cas, la teinte du matériau plastique est susceptible d'influencer la température de la paroi de la préforme lorsqu'elle est exposée à un rayonnement chauffant.

En effet, le rayonnement chauffant présente un spectre qui s'étend au moins en partie dans le domaine de la lumière visible. Or, lorsque la préforme présente une teinte, et notamment une teinte foncée, cette partie du spectre du rayonnement chauffant est susceptible de chauffer de manière significative le matériau thermoplastique.

### Résumé de l'invention

L'invention propose un procédé de commande d'une station de chauffage d'une installation de fabrication de récipients par formage, notamment par étirage-soufflage, de préformes en matériau thermoplastique, les préformes étant transportées le long d'un trajet de production qui traverse une zone de chauffage dans laquelle les préformes sont exposées à un rayonnement électromagnétique chauffant à spectre continu, ledit spectre s'étendant au moins en partie dans le domaine de la lumière visible, caractérisé en ce que le procédé comporte :
- une première étape de mesure du spectre d'absorption d'une paroi d'une préforme dans le domaine de la lumière visible dans une zone de mesure traversée par le trajet de production en amont de la zone de chauffage ;
- une deuxième étape de commande de la puissance du rayonnement électromagnétique chauffant en fonction du spectre d'absorption mesuré lors de la première étape pour chauffer le corps des préformes à une température de consigne.

Selon une autre caractéristique du procédé réalisé selon les enseignements de l'invention, la deuxième étape de commande comporte une première sous-étape de calcul d'une puissance corrigée du rayonnement électromagnétique chauffant en fonction du spectre d'absorption mesuré lors de la première étape, et une deuxième sous-étape de commande de la puissance du rayonnement électromagnétique chauffant à ladite puissance corrigée calculée lors de la première sous-étape.

Selon une autre caractéristique du procédé réalisé selon les enseignements de l'invention, lors de la première sous-étape de calcul, le spectre d'absorption mesuré est utilisé pour calculer les paramètres de la paroi de la préforme dans un espace chromatique déterminé équivalent à l'espace chromatique CIELAB comme défini par la norme ISO 11664-4: 2019.

Selon une autre caractéristique du procédé réalisé selon les enseignements de l'invention, la puissance corrigée est calculée lors de la première sous-étape au moins en fonction de la valeur d'un paramètre représentatif de la luminance de la paroi dans l'espace chromatique déterminé.

Selon une autre caractéristique du procédé réalisé selon les enseignements de l'invention, la puissance corrigée est calculée en fonction d'un taux dudit paramètre qui est calculé selon l'équation suivante : $Δ p = \frac{{p}_{0} - p}{{p}_{0}}$ dans laquelle *p*₀ représente une valeur de référence du paramètre et p représente le paramètre calculée à partie du spectre d'absorption mesuré lors de la première étape.

Selon une autre caractéristique du procédé réalisé selon les enseignements de l'invention, la puissance corrigée est calculée en fonction de la proportion de la puissance du rayonnement électromagnétique chauffant s'étendant dans le domaine de la lumière visible.

Selon une autre caractéristique du procédé réalisé selon les enseignements de l'invention, le rayonnement chauffant s'étend au moins en partie dans le domaine de l'infrarouge proche et en ce qu'il comporte une quatrième étape de mesure d'un facteur de transmission infrarouge d'une paroi de ladite préforme pour au moins une longueur d'onde appartenant au domaine de l'infrarouge proche, cette quatrième étape étant réalisée préalablement à la première sous-étape de calcul.

Selon une autre caractéristique du procédé réalisé selon les enseignements de l'invention, la puissance corrigée est calculée en fonction d'un taux de transmission qui est calculé selon l'équation suivante : $Δ T \left(λ2\right) = \frac{{T}_{0} \left(λ2\right) - T \left(λ2\right)}{{T}_{0} \left(λ2\right)}$ dans laquelle *T*0(*λ*2) représente une valeur de facteur de transmission infrarouge de référence et *T*(*λ*2) représente le facteur de transmission infrarouge mesuré lors de la quatrième étape.

Selon une autre caractéristique du procédé réalisé selon les enseignements de l'invention, la puissance corrigée est calculée en fonction de la proportion de la puissance du rayonnement électromagnétique chauffant s'étendant dans le domaine de l'infrarouge proche.

L'invention concerne aussi une installation pour la mise en œuvre du procédé, l'installation comportant des moyens de convoyage de préformes en file le long d'un trajet de production prédéterminé passant successivement à travers une zone de chauffage d'un corps des préformes et à travers une station de formage des préformes en récipient, notamment par étirage-soufflage,
caractérisée en ce que l'installation comporte un dispositif de mesure du spectre d'absorption dans le domaine de la lumière visible d'au moins une paroi des préformes lors de leur passage dans une zone de mesure associée.

Selon une autre caractéristique de l'installation réalisé selon les enseignements de l'invention, le dispositif de mesure du spectre d'absorption comporte :
- une première source lumineuse qui émet un premier faisceau lumineux selon un spectre continu qui s'étend au moins dans le domaine du visible,
- un spectromètre mesurant l'intensité et la longueur d'onde du premier faisceau lumineux après avoir traversé au moins une épaisseur de la paroi de la préforme.

Selon une autre caractéristique de l'installation réalisé selon les enseignements de l'invention, elle comporte un dispositif de mesure du facteur de transmission infrarouge d'au moins une paroi des préformes lors de leur passage dans une zone de mesure associée.

Selon une autre caractéristique de l'installation réalisé selon les enseignements de l'invention, le dispositif de mesure d'une valeur représentative du facteur de transmission infrarouge comporte :
- une source lumineuse qui émet un faisceau lumineux présentant au moins une deuxième longueur d'onde dans le domaine des infrarouges proches,
- un organe de mesure mesurant l'intensité pour l'au moins une deuxième longueur d'onde dudit faisceau lumineux après avoir traversé au moins une épaisseur de la paroi de la préforme. Selon une autre caractéristique de l'installation réalisé selon les enseignements de l'invention, le premier faisceau lumineux émis par la première source lumineuse présente un spectre continu qui comprend ladite au moins une deuxième longueur d'onde.

Selon une autre caractéristique de l'installation réalisé selon les enseignements de l'invention, le dispositif de mesure d'une valeur représentative du facteur de transmission infrarouge comporte une deuxième source lumineuse qui est distincte de la première source lumineuse et qui émet un deuxième faisceau lumineux présentant au moins une deuxième longueur d'onde dans le domaine des infrarouges proches.

Selon une autre caractéristique de l'installation réalisé selon les enseignements de l'invention, le premier faisceau lumineux et le deuxième faisceau lumineux traversent la paroi de la préforme à la même hauteur.

Selon une autre caractéristique de l'installation réalisé selon les enseignements de l'invention, le premier faisceau lumineux et le deuxième faisceau lumineux sont fusionnés en un faisceau commun avant d'atteindre la préforme.

Selon une autre caractéristique de l'installation réalisé selon les enseignements de l'invention, la mesure du facteur de transmission infrarouge et la mesure du spectre d'absorption sont réalisées simultanément en une même zone de mesure du trajet de production.

Selon une autre caractéristique de l'installation réalisé selon les enseignements de l'invention, l'organe de mesure du dispositif de mesure du facteur) de transmission infrarouge et le spectromètre du dispositif de mesure du spectre d'absorption sont formés par un unique spectromètre commun aux deux dispositifs.

### Brève description des figures

D'autres caractéristiques et avantages de l'invention apparaitront au cours de la lecture de la description détaillée qui va suivre pour la compréhension de laquelle on se reportera aux dessins annexés brièvement décrites ci-après.
La figure 1 est une vue de dessus qui représente schématiquement une installation de fabrication de récipients réalisée selon l'invention comportant une station de chauffage.
La figure 2 est une vue de côté qui représente une préforme destinée à être traiter par l'installation de la figure 1.
La figure 3 est une vue en coupe verticale transversale selon le plan de coupe 3-3 de la figure 1 qui représente un dispositif de mesure d'un spectre d'absorption dans le domaine de la lumière visible des parois d'une préforme circulant dans l'installation réalisé selon un premier mode de réalisation.
La figure 4 est un schéma-bloc qui représente un procédé de mise en œuvre de l'installation de la figure 1 pour commander la station de chauffage selon un premier mode de réalisation de l'invention.
La figure 5 est un diagramme indiquant des valeurs d'intensité lumineuse en ordonnée et des valeurs de longueurs d'ondes en abscisse, qui représente en traits interrompus le spectre d'un premier faisceau lumineux émis par une source lumineuse du dispositif de la figure 3 et qui représente, en trait continu, le spectre d'absorption de la paroi de la préforme.
La figure 6 est un schéma-bloc similaire à celui de la figure 4 qui représente un procédé de mise en œuvre de l'installation de la figure 1 pour commander la station de chauffage selon un deuxième mode de réalisation de l'invention.
La figure 7 est une vue en coupe verticale transversale selon le plan de coupe 3-3 de la figure 1 qui représente un dispositif de mesure d'un spectre d'absorption dans le domaine de la lumière visible combiné avec un dispositif de mesure d'un facteur de transmission infrarouge des parois d'une préforme circulant dans l'installation réalisé selon un deuxième mode de réalisation.
La figure 8 est un diagramme similaire à celui de la figure 5 qui représente en traits interrompus le spectre d'un faisceau lumineux émis par deux sources lumineuses du dispositif de la figure 7 et qui représente, en trait continu, le spectre d'absorption de la paroi de la préforme ainsi que le faisceau transmis dans le domaine de l'infrarouge proche.

### Description détaillée de l'invention

Dans la suite de la description, les termes "haut", "bas", et les termes dérivés "haute", "basse", sont utilisés par souci de clarté en référence à l'orientation des figures sans que ceci n'ait une quelconque portée limitative.

Dans la suite de la description, les longueurs d'onde des rayonnements lumineux seront exprimées en nanomètre, indiqué par l'abréviation « nm ».

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle ayant un spectre d'émission en fréquence qui s'étend sur une bande de largeur spectrale faible mais non nulle, par exemple de quelque dizaine de nanomètres, centrée sur une fréquence principale où l'intensité du rayonnement est maximale.

Dans la suite de la description, on considère comme monochromatique une telle source réelle.

Par la suite, on définit un spectre d'absorption comme étant une courbe qui représente la valeur de l'intensité d'un faisceau lumineux à spectre continu en fonction de la longueur d'onde après son passage à travers un milieu à analyser, notamment la paroi d'une préforme.

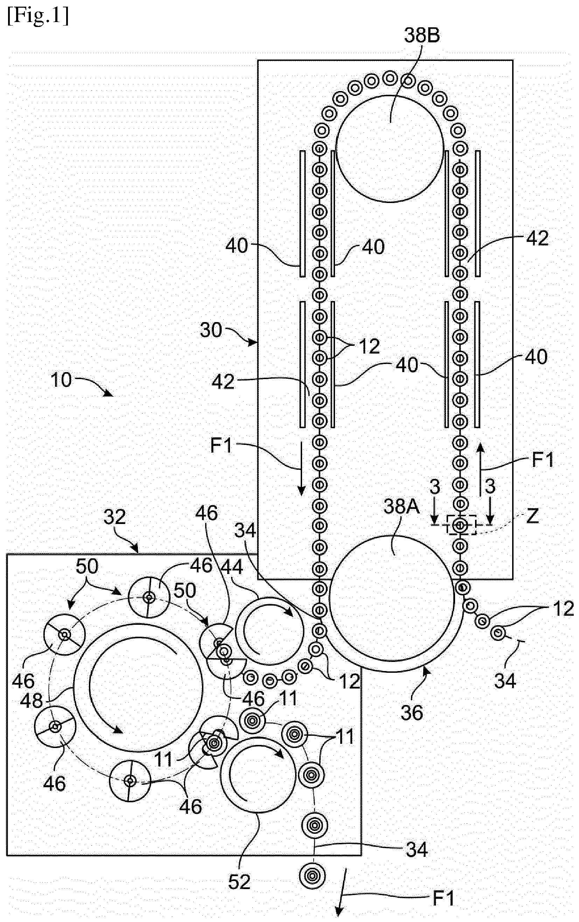

Sur la figure 1 est illustrée schématiquement une installation 10 pour la fabrication de récipients 11 à partir de préformes 12 en matière thermoplastique et plus particulièrement en PET (polyéthylène téréphtalate) ou en rPET (polyéthylène téréphtalate recyclé). Le matériau thermoplastique peut éventuellement contenir, mais pas obligatoirement, des additifs qui augmentent artificiellement le facteur d'absorption de la préforme, ou encore une teinture pour en changer la couleur.

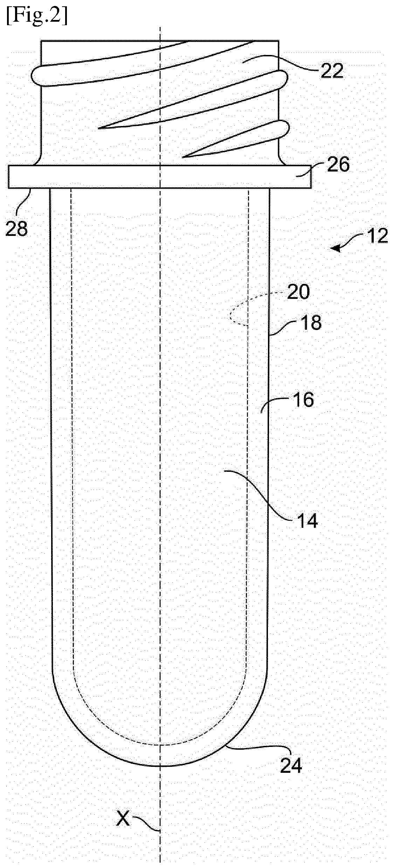

Comme représenté à la figure 2, chaque préforme 12 comporte un corps 14 cylindrique d'axe « X ». Le corps 14 comporte une paroi 16 latérale transparente qui délimite un volume intérieur. La paroi 16 présente une forme de révolution autour de l'axe « X » de sorte qu'à une hauteur donnée, la paroi 16 présente une épaisseur constante. Cependant, l'épaisseur de la paroi 16 est susceptible de varier en fonction de la hauteur. La paroi 16 est délimitée par une face 18 externe qui est tournée vers l'extérieur de la préforme 12 et par une face 20 interne qui est tournée vers le volume intérieur.

Une extrémité supérieure du corps 14 débouche par un col 22. Le col 22 présente la forme définitive de celui du récipient 11 à obtenir. De ce fait, le col 22 ne subit pas la moindre déformation pendant la fabrication du récipient 11. Le corps 14 comporte un fond 24 qui ferme son extrémité inférieure et dont la forme est généralement hémisphérique. Le col 22 comporte une collerette 26 agencée à sa jonction avec le corps 14. La face inférieure de la collerette 26 est destinée à former une surface 28 d'appui pour permettre de soutenir la préforme 12 pendant son moulage et/ou pendant son transport.

A la fin de leur moulage par injection, les préformes 12 sont refroidies brutalement pour conférer au matériau thermoplastique un état amorphe. Il est ainsi possible de rendre le matériau thermoplastique à nouveau malléable par chauffage au-delà d'une température de transition vitreuse.

En se reportant à nouveau à la figure 1, l'installation 10 de fabrication comprend une station de chauffage 30 et une station 32 de formage. Les préformes 12 se déplacent en file le long d'un trajet 34 de production qui passe à travers la station 30 de chauffage et la station 32 de formage. Le sens de déplacement des préformes 12 est indiqué par les flèches « F1 » de la figure 1. Lors du fonctionnement normal de l'installation 10 de fabrication, les préformes 12 sont en déplacement constant le long du trajet 34 de production.

La station 30 de chauffage a pour fonction de chauffer le corps 14 des préformes 12 à une température de consigne qui est supérieure ou égale à la transition vitreuse du matériau constitutif, par exemple supérieure à 70°C lorsque ce matériau est du PET ou du rPET. La station 30 de chauffage comprend un convoyeur 36 (illustré schématiquement) pour transporter les préformes 12 en les faisant tourner sur elles-mêmes.

Le convoyeur 36 comporte généralement des mandrins (non représentés) qui sont emboîtés avec le col 22 pour transporter les préformes 12. Les mandrins se déplacent le long d'un circuit fermé. Les mandrins sont par exemple portés par les maillons d'une chaîne ou encore par des navettes indépendantes se déplaçant le long d'un rail.

Le circuit comporte ici deux tronçons rectilignes parallèles reliés par des tronçons de virage à 180°. Le convoyeur 36 comporte en outre deux roues 38A, 38B de guidage des mandrins dans les portions de virage du circuit fermé.

La station 30 de chauffage comporte aussi des moyens 40 de chauffage pour chauffer les préformes 12. Il s'agit par exemple de lampes faisant face à des réflecteurs qui émettent un rayonnement électromagnétique chauffant à spectre continu.

Le rayonnement chauffant s'étend au moins en partie dans le domaine des infrarouges proches qui est compris dans une plage de longueurs d'ondes comprises entre 780 nm et 3000 nm.

L'intensité du rayonnement électromagnétique chauffant est notamment plus élevé dans une plage de longueurs d'ondes de plus forte intensité comprise entre 800 nm et 1600 nm.

Le rayonnement chauffant s'étend aussi au moins en partie dans le domaine de la lumière visible qui est globalement compris entre 380 nm et 780 nm.

Le spectre du rayonnement chauffant s'étend par exemple entre 300 nm et 3000 nm.

Les moyens 40 de chauffage sont agencés le long d'une zone 42 de chauffage du trajet 34 de production des préformes. Dans l'exemple représenté à la figure 1, la station 30 de chauffage comporte une zone 42 de chauffage divisée en deux parties agencées en amont et en aval de la portion de virage guidée par la roue 38B de guidage.

Les préformes 12 entrant dans la station 30 de chauffage sont prises en charge individuellement par le convoyeur 36 sur lequel elles effectuent un tronçon en forme de U de leur trajet 34 de production passant à travers la zone 42 de chauffage. Elles sont chauffées au défilé par les moyens 40 de chauffage, lesquels, le cas échéant, sont placés d'un côté ou de part et d'autre des préformes 12 par rapport à leur sens de défilement. Les préformes 12 chaudes sont extraites de la station 30 de chauffage après leur passage dans la zone 42 de chauffage et transférées dans des moules de la station 32 de formage par un premier dispositif 44 de transfert, tel qu'une roue de transfert, interposé entre la station 30 de chauffage et la station 32 de formage.

La roue de transfert comprend des bras (non représentés, car connus en soi) qui viennent saisir successivement les préformes 12, à leur sortie de la station 30 de chauffage, au niveau de leur col 22, pour les introduire chacune à leur tour dans un moule 46 de la station 32 de formage. La station 32 de formage comprend un carrousel 48 tournant à la périphérie duquel sont disposés plusieurs postes 50 de soufflage.

Chaque poste 50 de soufflage comprend au moins un moule 46 qui définit une cavité présentant l'empreinte du récipient 11. Chaque poste 50 de soufflage comporte des moyens (non représentés) pour former déformer le corps 14 de la préforme 12 et le plaquer contre l'empreinte du moule 46, par exemple par étirage-soufflage.

Chaque préforme 12 chaude sortant de la station 30 de chauffage est introduite dans un moule 46 du poste 50 de soufflage pour y être soufflée et transformée en récipient 11. Une fois achevé, le récipient 11 est extrait du poste 50 de soufflage par un second dispositif 52 de transfert, similaire au premier dispositif 34 de transfert.

Généralement, les moyens 40 de chauffage émettent le rayonnement chauffant à une puissance déterminée uniquement en fonction du facteur d'absorption des préformes 12 dans le domaine de l'infrarouge proche afin d'atteindre la température de consigne. Cette puissance est calculée en considérant que la préforme 12 présente des parois 16 parfaitement transparentes dans le domaine de la lumière visible.

Pour permettre de chauffer les préformes 12 au plus près de la température de consigne, l'invention propose un procédé de commande de la station 30 de chauffage qui consiste à mesurer un spectre « *σ*(λ1) » d'absorption de la paroi 16 de la préforme 12 dans le domaine de la lumière visible dans une zone « Z » de mesure traversée par le trajet 34 de production en amont de la zone 42 de chauffage, puis à commander la puissance du rayonnement électromagnétique chauffant en fonction du spectre « σ(λ1) » d'absorption mesuré.

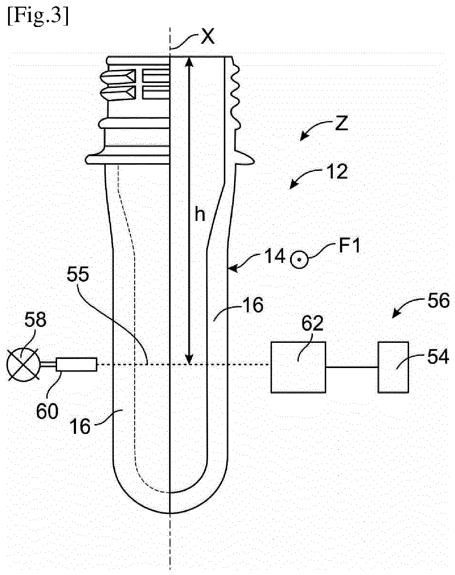

Ce procédé est ici mis en œuvre automatiquement par une unité 54 électronique de commande, visible notamment à la figure 3. Ce procédé est mis en œuvre lorsque la préforme 12 est transportée par un convoyeur le long du trajet 34 de production dans l'installation 10 de fabrication de récipients 11. De préférence, la préforme 12 est en déplacement constant lors de la mise en œuvre du procédé.

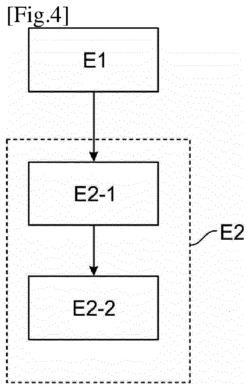

Dans les exemples représentés aux figures, le procédé est mis en œuvre lorsque les préformes 12 sont transportées par le convoyeur 36 de la station 30 de chauffage. Ce convoyeur 36 transporte les préformes 12 à travers à la zone 42 de chauffage. Le procédé est de préférence mis en œuvre sur les préformes 12 avant leur chauffage, donc en amont de la zone 42 de chauffage. Comme représenté à la figure 4, le procédé comporte ainsi une première étape « E1 » de mesure du spectre « *σ*(λ1) » d'absorption de la paroi 16 d'une préforme 12 dans le domaine de la lumière visible.

La première étape « E1 » de mesure du spectre « *σ*(λ1) » d'absorption est ici effectuée en mesurant l'atténuation de l'intensité « I » d'un premier faisceau 55 lumineux à spectre « σ₀ » continu dans le domaine du visible pour chacune des longueurs d'onde du spectre « σ0 ».

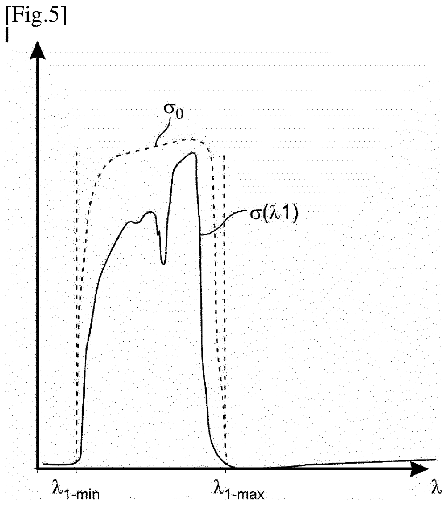

Le premier faisceau 55 lumineux est un faisceau de lumière dite « blanche » qui émet dans le domaine de la lumière visible, c'est-à-dire globalement entre 380 nm et 780 nm. Par exemple, le spectre « σ0 » du premier faisceau 55 lumineux s'étend dans une plage de longueurs d'onde « λ1 » qui s'étend entre une borne inférieure « λ1-min », par exemple égale à 400 nm, et une borne supérieure « λ1-max », par exemple égale à 700 nm. Le spectre « σ0 » du premier faisceau 55 lumineux est représenté par une courbe en traits interrompus à la figure 5.

A cet effet, l'installation 10 comporte un dispositif 56 de mesure du spectre « σ(λ1) » d'absorption dans le domaine de la lumière visible. Comme représenté à la figure 5 par une courbe en traits pleins, ce dispositif 56 est agencé pour mesurer le spectre « σ(λ1) » d'absorption d'une préforme 12 passant dans la zone « Z » de mesure représentée à la figure 1.

Comme représenté à la figure 3, le dispositif 56 de mesure du spectre « σ(λ1) » d'absorption dans le domaine de la lumière visible comporte une première source 58 lumineuse qui émet le premier faisceau 55 lumineux à spectre « σ0 » continu.

La première source 58 lumineuse comporte par exemple une diode électroluminescente (LED), une diode superluminescente (SLED) ou une lampe. Le premier faisceau 55 lumineux est émis perpendiculairement à la paroi 16 de la préforme 12. Le premier faisceau 55 lumineux est émis de manière à traverser la préforme 12 en passant par son axe « X » principal.

Le premier faisceau 55 lumineux est plus particulièrement émis selon un axe qui est perpendiculaire à une tangente au trajet 34 de production de la préforme 12 dans la zone « Z » de mesure. Le premier faisceau 55 lumineux traverse la paroi 16 à une hauteur « h » déterminée.

Le premier faisceau 55 lumineux peut être guidé dans la bonne direction par un moyen de guidage optique tel qu'une fibre optique 60.

Le dispositif 56 de mesure du spectre « σ(λ1) » d'absorption dans le domaine de la lumière visible comporte en outre un spectromètre 62 qui mesure l'intensité « I » en fonction de la longueur d'onde « λ1 » du spectre « σ0 » du premier faisceau 55 lumineux après avoir traversé au moins une fois la paroi 16 du corps 14 de la préforme 12, comme représenté à la figure 5.

Le spectromètre 62 est ici agencé de manière à mesurer l'intensité « I » du premier faisceau 55 lumineux de l'autre côté de la préforme 12 par rapport à l'axe « X » de la préforme 12 après qu'il ait traversé deux fois la paroi 16 en deux points diamétralement opposés, à la même hauteur « h » de la préforme 12.

En variante non représentée de l'invention, le spectromètre est agencé de manière à mesurer l'intensité du premier faisceau lumineux après qu'il ait traversé une seule fois la paroi de la préforme. Dans ce cas, un organe d'interception du faisceau lumineux est introduit dans la préforme lors de la première étape, l'organe d'interception guidant le faisceau lumineux intercepté jusqu'au spectromètre.

Le spectromètre 62 permet ainsi d'obtenir le spectre « σ(λ1) » d'absorption mesuré représenté à la figure 5.

Comme représenté à la figure 4, le procédé comporte en outre une deuxième étape « E2 » de commande de la puissance du rayonnement électromagnétique chauffant en fonction du spectre « σ(λ1) » d'absorption mesuré lors de la première étape « E1 ». Cette deuxième étape « E2 » de commande est mise en œuvre par l'unité 54 électronique de commande qui reçoit les données mesurées par le spectromètre 62.

La deuxième étape « E2 » de commande comporte une première sous-étape « E2-1 » de calcul d'une puissance corrigée « Ptc » du rayonnement électromagnétique chauffant en fonction du spectre « σ(λ1) » d'absorption mesuré lors de la première étape « E1 ». Cette puissance corrigée « Ptc » correspond à la puissance effectivement nécessaire pour chauffer la préforme 12 à la température de consigne en prenant en compte l'influence de la teinte de la préforme 12.

Lors de cette première sous-étape « E2-1 » de calcul, le spectre « σ(λ1) » d'absorption mesuré est utilisé pour calculer les paramètres de la couleur de la paroi 16 de la préforme 12 dans un espace chromatique déterminé.

A titre d'exemple non limitatif, un tel espace chromatique est ici formé par l'espace chromatique CIELAB comme défini par la norme ISO 11664-4:2019, parfois désigné sous l'appellation « L*a*b* CIE 1976 ».

En variante non représentée de l'invention, l'espace chromatique déterminé peut être un autre espace chromatique normé équivalent à l'espace CIELAB tel que l'espace chromatique CIE RVB, défini par la norme ISO 61966-2-1 :2003, ou l'espace chromatique CIE XYZ , défini par la norme 11664-3:2019, ou l'espace chromatique CIE 1976 L*u*v*, défini par la norme ISO 1164-5:2016, ou encore l'espace chromatique CIE U'V'W'. Un espace chromatique est « équivalent » à l'espace CIELAB lorsqu'il existe une bijection qui permet de passer d'un espace à l'autre aisément.

Trois paramètres caractérisent les couleurs dans l'espace chromatique CIELAB. La clarté L* dérive de la luminance. Les deux paramètres a* et b* expriment l'écart de la couleur par rapport à celle d'une surface grise de même clarté. Une surface grise, non colorée, achromatique, est éclairée par une lumière de référence qui est ici déterminée comme étant la lumière du jour normalisée D65 selon la norme ISO 23603:2005.

Les paramètres du système L*a*b* sont ainsi :
- la clarté L* qui prend des valeurs entre 0, correspondant au noir, à 100, correspondant au blanc ;
- a* représente la valeur sur un axe allant du vert au rouge ;
- b* représente la valeur sur un axe allant du bleu au jaune. Selon la norme ISO 11664-4:2019, les différents paramètres sont calculés en fonction du facteur de transmission T(λ1) pour chaque longueur d'onde associée.

Plus particulièrement, l'intensité « I0 » lumineuse d'émission à laquelle le premier faisceau 55 lumineux est émis en fonction de la longueur d'onde « λ1 » est une donnée connue. L'intensité « I0 » lumineuse à laquelle le premier faisceau 55 lumineux est émis peut aussi être mesurée directement par le spectromètre 62 lorsqu'aucune préforme 12 ne passe dans la zone « Z » de mesure, comme représenté par la courbe en traits interrompus à la figure 5.

Après avoir traversé deux fois la paroi 16 de la préforme 12, l'intensité lumineuse du premier faisceau 55 lumineux est atténuée. Le premier faisceau 55 lumineux présente alors une intensité lumineuse dite « intensité « I1 » lumineuse transmise », comme représenté par la courbe en trait plein à la figure 5.

Ainsi, il est aisé d'en déduire le facteur de transmission de la paroi 16 de la préforme en fonction de la longueur d'onde dans le domaine de la lumière visible en effectuant le rapport entre l'intensité « I0 » lumineuse d'émission et l'intensité « I1 » lumineuse transmise.

Chaque paramètre dans l'espace chromatique déterminé, tel que l'espace CIELAB, est ensuite calculée en fonction du facteur de transmission T(λ1) et de la longueur d'onde « λ1 » associée.

La puissance corrigée « Ptc » est calculée lors de la première sous-étape au moins en fonction d'au moins un paramètre de l'espace chromatique déterminé, tel qu'un paramètre représentatif de la luminance de la paroi 16. La puissance corrigée « Ptc » est plus particulièrement calculée en fonction d'un taux dudit paramètre « Δp » qui est calculé selon l'équation suivante : $Δ p = \frac{{p}_{0} - p}{{p}_{0}}$ dans laquelle *p*₀ représente une valeur de référence du paramètre et p représente le paramètre calculée à partie du spectre « σ(λ1) » d'absorption mesuré lors de la première étape « E1 ».

Selon un exemple de réalisation, la puissance corrigée « Ptc » est calculée lors de la première sous-étape au moins en fonction du paramètre de clarté « L* » de l'espace chromatique CIELAB. La puissance corrigée « Ptc » est plus particulièrement calculée en fonction d'un taux de clarté « ΔL* » qui est calculé selon l'équation suivante : $Δ {L}^{∗} = \frac{{L}_{0}^{∗} - {L}^{∗}}{{L}_{0}^{∗}}$ dans laquelle ${L}_{0}^{∗}$ représente une valeur de clarté de référence et L* représente la clarté calculée à partie du spectre « σ(λ1) » d'absorption mesuré lors de la première étape « E1 ».

La valeur de référence est par exemple la valeur du paramètre, ici la clarté, qui correspond au cahier des charges d'une préforme 12, dite préforme 12 de référence. Il peut aussi s'agir dudit paramètre, ici de la clarté, d'une préforme 12 prise en échantillon dans le lot de préformes 12 qui doit être traité par l'installation 10, ou encore de la moyenne des valeurs dudit paramètre, ici de la clarté, d'un échantillon de plusieurs préformes 12 prises dans le lot de préformes 12 qui doit être traité.

Le taux dudit paramètre « *Δp* », par exemple le taux de clarté « ΔL* », est ainsi susceptible de varier entre 0, pour une préforme 12 présentant la même valeur que la préforme 12 de référence, et 1.

La puissance corrigée « *Ptc »* est aussi calculée en fonction de la proportion de la puissance du rayonnement électromagnétique chauffant s'étendant dans le domaine de la lumière visible. En effet, le rayonnement électromagnétique chauffant s'étend ici dans le domaine de la lumière visible et, pour une majeure partie, dans le domaine de l'infrarouge proche.

Ainsi, la puissance totale du rayonnement électromagnétique chauffant peut se formuler ainsi : $Pt 0 = Pnir 0 + Pvis 0$ dans laquelle Pt0 représente la puissance totale instantanée du rayonnement électromagnétique chauffant pour chauffer la préforme 12 de référence à la température de consigne, Pnir0 représente la puissance instantanée du rayonnement électromagnétique chauffant émise dans le domaine de l'infrarouge proche, et Pvis0 représente la puissance instantanée du rayonnement électromagnétique chauffant émise dans le domaine de la lumière visible.

La puissance corrigée « Ptc » du rayonnement électromagnétique chauffant est alors calculée selon l'équation suivante : $Ptc = Pnir 0 + Pvis 0 . \left(1-Δp\right)$

Dans le cas de l'utilisation du taux de clarté ΔL* pour calculer la puissance corrigée « Ptc » du rayonnement électromagnétique chauffant, l'équation devient : $Ptc = Pnir 0 + Pvis 0 . \left(1-ΔL∗\right)$

De préférence, mais pas obligatoirement, pour éviter que la puissance du rayonnement chauffant ne change de manière trop chaotique et rapide en fonction des différentes valeurs mesurées pour chaque préforme 12, la puissance corrigée « Ptc » est calculée en prenant en compte la mesure dudit paramètre, notamment de la clarté, pour plusieurs préformes 12 successive. Le nombre de préformes 12 est par exemple égale au nombre de préformes susceptibles d'être contenues simultanément dans la zone 42 de chauffage. Il s'agit ici d'une moyenne glissante qui est remise à jour à chaque nouvelle préforme 12 reçue dans la zone « Z » de mesure.

Lors d'une deuxième sous-étape « E2-2 » de commande de la deuxième étape « E2 », la puissance du rayonnement électromagnétique chauffant est commandée en fonction la valeur de correction calculée lors de la première sous-étape « E2-1 » pour chauffer le corps 14 des préformes 12 à la température de consigne en prenant en compte la teinte des préformes 12.

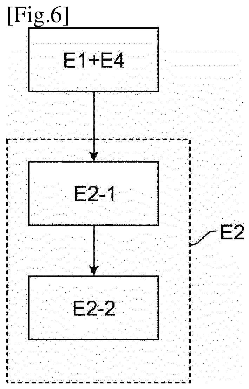

Selon un deuxième mode de réalisation de l'invention représenté à la figure 6, pour permettre de commander au mieux la puissance du rayonnement chauffant, le procédé décrit précédemment comporte en outre une quatrième étape « E4 » de mesure d'un facteur de transmission « T(λ2) » infrarouge de la paroi 16 de ladite préforme 12 pour au moins une longueur d'onde « λ2 » appartenant au domaine de l'infrarouge proche. Ceci permet notamment de prendre en compte la variation du facteur de transmission « T(λ2) » infrarouge des préformes 12 au sein d'un même lot de préformes 12 à traiter dans la deuxième étape « E2 » du procédé et notamment dans la première sous-étape « E2-1 » de calcul de la puissance corrigée « Ptc ».

Cette quatrième étape « E4 » est réalisée préalablement à la première sous-étape étape « E2-1 » de calcul. Elle peut être réalisée avant, après ou pendant la première étape « E1 » de mesure.

La quatrième étape « E4 » de mesure du facteur de transmission « T(λ2) » infrarouge est ici effectuée en mesurant l'atténuation de l'intensité « I » d'un deuxième faisceau 66 lumineux qui comprend une deuxième longueur d'onde « λ2 » prédéterminée. La deuxième longueur d'onde « λ2 » prédéterminée est comprise dans le domaine des infrarouges proches. Elle appartient de préférence à la plage de longueurs d'ondes de plus forte intensité du rayonnement électromagnétique chauffant, ici comprise entre 800 nm et 1600 nm.

Il peut aussi s'agir d'une plage de longueurs d'ondes appartenant aux infrarouges proches pour chacune desquelles on mesure le facteur de transmission.

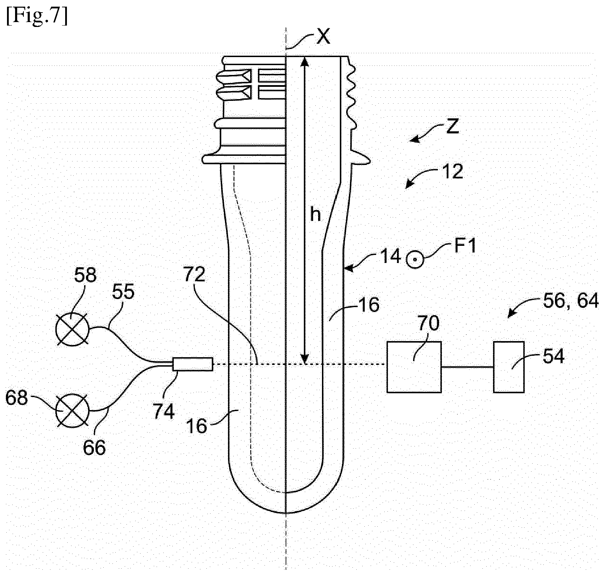

A cet effet, l'installation 10 comporte un dispositif 64 de mesure du facteur de transmission « T(λ2) » infrarouge représenté à la figure 7. Comme représenté à la figure 1, ce dispositif 64 est agencé pour mesurer le facteur de transmission « T(λ2) » infrarouge d'une préforme 12 passant dans ladite zone « Z » de mesure.

Le dispositif 64 de mesure du facteur de transmission « T(λ2) » infrarouge comporte une deuxième source 68 lumineuse qui émet le deuxième faisceau 66 lumineux présentant la deuxième longueur d'onde « λ2 ». Il peut s'agir d'une source lumineuse monochromatique, mais ce n'est pas obligatoire.

La deuxième source 68 lumineuse comporte par exemple une diode électroluminescente (LED), une diode superluminescente (SLED) ou une lampe. Le deuxième faisceau 66 lumineux est émis perpendiculairement à la paroi 16 de la préforme 12. Le deuxième faisceau 66 lumineux est émis de manière à traverser la préforme 12 en passant par son axe « X » principal.

Le deuxième faisceau 66 lumineux traverse la paroi 16 à ladite hauteur « h ». Ainsi, le premier faisceau 55 lumineux et le deuxième faisceau 66 lumineux traversent la paroi 16 de la préforme 12 à la même hauteur « h ».

Le deuxième faisceau 66 lumineux est plus particulièrement émis selon un axe qui est perpendiculaire à une tangente au trajet 34 de production de la préforme 12 dans la zone « Z » de mesure. Le deuxième faisceau 66 lumineux peut être guidé dans la bonne direction par un moyen de guidage optique tel qu'une fibre optique.

Le dispositif 64 de mesure du facteur de transmission « T(λ2) » infrarouge comporte en outre un organe de mesure de l'intensité « I » du deuxième faisceau 66 lumineux après avoir traversé au moins une fois la paroi 16 du corps 14 de la préforme 12. L'organe de mesure de l'intensité « I » est ici agencé de manière à mesurer l'intensité « I » du deuxième faisceau 66 lumineux de l'autre côté de la préforme 12 par rapport à l'axe « X » de la préforme 12 après qu'il ait traversé deux fois la paroi 16 en deux points diamétralement opposés, à la même hauteur « h » de la préforme 12.

Dans cette configuration, il est préférable de choisir la deuxième longueur d'onde « λ2 » prédéterminée dans une plage de longueurs d'ondes pour lesquelles le matériau thermoplastique est suffisamment transparent afin que l'intensité « I » du deuxième faisceau 66 lumineux après avoir traversé deux fois la paroi 16 puisse être mesurée avec suffisamment de précision et de certitude par l'organe de mesure. En effet, l'intensité « I » du deuxième faisceau 66 lumineux risquerait d'être trop atténuée après deux passages à travers la paroi 16 s'il était émis à une longueur d'onde facilement absorbée par le matériau thermoplastique.

Par exemple, dans le cas d'un matériau plastique réalisé en PET ou en rPET, la deuxième longueur d'onde « λ2 » est comprise dans les plages comprises entre 800 nm et 1100 nm, ou entre 1250 nm et 1300 nm. La deuxième longueur d'onde « λ2 » est par exemple choisie parmi les valeurs suivantes : 850 nm, 860 nm, 880 nm, 940 nm, 950 nm, 960 nm, 980 nm, 1050 nm ou 1300 nm. En variante non représentée de l'invention, l'organe de mesure de l'intensité est agencé de manière à mesurer l'intensité du deuxième faisceau lumineux pour ladite deuxième longueur d'onde après qu'il ait traversé une seule fois la paroi de la préforme. Dans ce cas, l'organe de mesure comporte un organe d'interception du deuxième faisceau lumineux qui est introduit dans la préforme lors de la première étape, l'organe d'interception guidant le deuxième faisceau lumineux intercepté jusqu'à un organe de mesure de l'intensité.

La deuxième longueur d'onde « λ2 » du deuxième faisceau 66 lumineux est ici en dehors de la plage de longueurs d'onde « λ1 » du premier faisceau 55 lumineux.

L'organe de mesure est ici formé par un spectromètre mesurant l'intensité « I » et la deuxième longueur d'onde « λ2 » du deuxième faisceau 66 lumineux après avoir traversé au moins une épaisseur de la paroi 16 de la préforme 12.

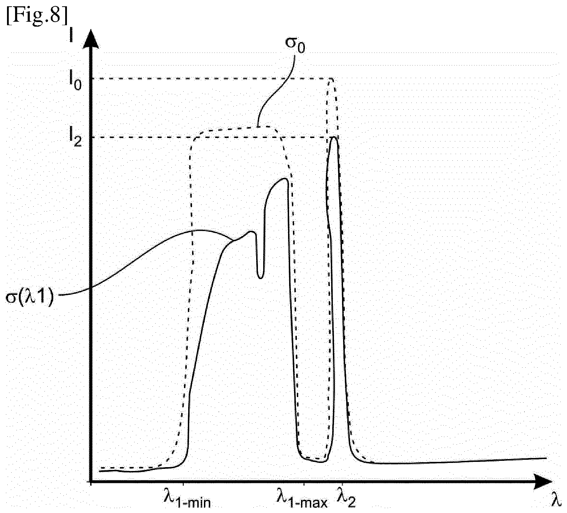

L'intensité « I0 » lumineuse d'émission à laquelle le premier faisceau 66 lumineux est émis est une donnée connue. L'intensité « I0 » lumineuse à laquelle le deuxième faisceau 66 lumineux est émis peut aussi être mesurée directement par l'organe 62 de mesure lorsqu'aucune préforme 12 ne passe dans la zone « Z » de mesure, comme représenté en traits interrompus à la figure 8. Après avoir traversé deux fois la paroi 16 de la préforme 12, l'intensité lumineuse du deuxième faisceau 66 lumineux est atténuée. Le deuxième faisceau 66 lumineux présente alors une intensité lumineuse dite « intensité « I2 » lumineuse transmise ». Ainsi, il est aisé d'en déduire le facteur de transmission « T(λ2) » infrarouge en fonction du rapport entre l'intensité « I0 » lumineuse d'émission et l'intensité « I2 » lumineuse transmise.

Optionnellement, pour calculer précisément le facteur de transmission « T(λ2) » infrarouge, il est possible, mais pas obligatoire, de pondérer ici ce ratio en prenant en compte la quantité du deuxième faisceau 68 lumineux qui est réfléchie à chaque entrée dans une paroi 16. Cette quantité réfléchie est calculée en fonction du facteur de réflectance « R » qui est une quantité connue préalablement.

Le facteur de pondération pour le passage du deuxième faisceau 66 lumineux à travers une épaisseur de paroi 16 est calculé selon l'équation suivante : ${f}_{1} = \frac{{\left(1-R\right)}^{2}}{1 - {R}^{2}}$

Le facteur de pondération pour le passage du deuxième faisceau 66 lumineux à travers deux épaisseurs de paroi 16 est calculé selon l'équation suivante : ${f}_{2} = \frac{{f}_{1}}{\left(2-{f}_{1}\right)}$

Le facteur de transmission « T(λ2) » infrarouge lors du passage à travers deux épaisseurs de paroi 16 est ainsi calculé par application de l'équation suivante : $T \left(λ2\right) = \frac{{I}_{2}}{{I}_{0}} . {f}_{2}$

Le facteur de transmission « T(λ2) » infrarouge est calculé par l'unité 54 électronique de commande qui reçoit les mesures effectuées par l'organe de mesure.

Avantageusement, la mesure de la valeur représentative du facteur de transmission « T(λ2) » infrarouge et la mesure du spectre « σ(λ1) » d'absorption de la paroi 16 sont réalisées simultanément en une même zone Z de mesure du trajet 34 de production.

Pour ce faire, le dispositif 56 de mesure du spectre « σ(λ1) » d'absorption dans le domaine de la lumière visible et l'organe de mesure du facteur de transmission « T(λ2) » infrarouge sont ici agencé dans la zone « Z » commune de mesure, comme représenté à la figure 7.

Très avantageusement, le spectromètre du dispositif 56 de mesure du spectre « σ(λ1) » d'absorption dans le domaine de la lumière visible et le spectromètre du dispositif 64 de mesure du facteur de transmission « T(λ2) » infrarouge sont formés par un unique spectromètre 70 commun aux deux dispositifs 56, 64.

A cet effet, le premier faisceau 55 lumineux et le deuxième faisceau 66 lumineux sont fusionnés en un faisceau 72 commun avant d'atteindre la préforme. Cette fusion est par exemple réalisée au moyen d'un coupleur 74 optique. Ainsi, le spectre du faisceau 72 commun présente une portion continue dans le domaine de la lumière visible, et un pic pour la valeur de la deuxième longueur d'onde « λ2 » comme représenté par la courbe « σ0 » en traits interrompus à la figure 8.

En variante non représentée, le premier faisceau 55 lumineux émis par la première source 58 lumineuse présente un spectre continu qui comprend ladite au moins une deuxième longueur d'onde « λ2 ». Dans ce cas, le premier faisceau 55 lumineux seul permet d'effectuer simultanément les deux mesures et la deuxième source lumineuse n'est pas nécessaire. Le spectromètre 72 commun permet d'obtenir les deux mesures simultanément à partir du premier faisceau 55 lumineux seul. Une telle première source lumineuse 58 est par exemple formée par une lampe halogène.

Le spectre mesuré par le spectromètre 70 commun après que le faisceau 72 commun ait traversé la paroi 16 est représenté en trait continu à la figure 8. Il présente simultanément le spectre d'absorption σ(λ1) et le pic d'intensité « I2 » pour la deuxième longueur d'onde « λ2 ».

Le faisceau 72 lumineux commun est émis perpendiculairement à la paroi 16 de la préforme 12 de manière à traverser la paroi 16 en passant par son axe « X » principal.

Le faisceau 72 lumineux commun est plus particulièrement émis selon un axe perpendiculaire à une tangente à la trajectoire de la préforme 12 dans la zone « Z » commune de mesure.

Le faisceau 72 lumineux commun traverse la paroi 16 à ladite hauteur « h ».

En variante non représentée de l'invention, le dispositif 56 de mesure du spectre « σ(λ1) » d'absorption dans le domaine de la lumière visible et le dispositif 64 de mesure du facteur de transmission « T(λ2) » infrarouge sont agencés en deux zones de mesure distinctes du trajet de production de manière que les deux mesures correspondantes sont effectuées successivement sur une même préforme. Dans ce cas, chacun des dispositifs comporte une source lumineuse et un spectromètre associé.

La deuxième étape « E2 » de commande comporte la première sous-étape « E2-1 » de calcul telle que décrite dans le premier mode de réalisation.

Cette première sous-étape « E2-1 » reprend les mêmes calculs tels que décrits dans le premier mode de réalisation, mais elle est complétée par la prise en compte du facteur de transmission « T(λ2) » infrarouge mesuré lors de la quatrième étape « E4 » pour le calcul de la puissance corrigée « Ptc » du rayonnement électromagnétique chauffant.

Selon un exemple de réalisation, la puissance corrigée « Ptc » est aussi calculée lors de la première sous-étape « E2-1 » en fonction facteur de transmission « T(λ2) » infrarouge mesuré. La valeur de correction est plus particulièrement calculée en fonction d'un taux de transmission « ΔT(λ2) » qui est calculé selon l'équation suivante : $Δ T \left(λ2\right) = \frac{{T}_{0} \left(λ2\right) - T \left(λ2\right)}{{T}_{0} \left(λ2\right)}$ dans laquelle « T0(λ2) » représente une valeur de facteur de transmission infrarouge de référence et « T(λ2) » représente le facteur de transmission infrarouge mesuré lors de la quatrième étape « **E4** ».

La valeur de référence est par exemple de la première préforme 12 en début de production, dite préforme 12 de référence.

La valeur de référence est par exemple le facteur de transmission « T0(λ2) » infrarouge qui correspond au cahier des charges d'une préforme 12, dite préforme 12 de référence. Il peut aussi s'agir du facteur de transmission « T0(λ2) » infrarouge mesuré pour une préforme 12 prise en échantillon dans le lot de préformes 12 qui doit être traité par l'installation 10, ou encore de la moyenne des facteurs de transmission « T0(λ2) » infrarouge mesurés pour un échantillon de plusieurs préformes 12 prises dans le lot de préformes 12 qui doit être traité.

Le taux de transmission « ΔT(λ2) » est ainsi susceptible de varier entre 0, pour une préforme 12 présentant le même facteur de transmission « T(λ2) » infrarouge que la préforme 12 de référence, et 1.

La puissance corrigée « Ptc » est aussi calculée en fonction de la proportion de la puissance du rayonnement électromagnétique chauffant s'étendant dans le domaine des infrarouges proches. La puissance du rayonnement électromagnétique chauffant est alors corrigée selon l'équation suivante : $Ptc = Pnir 0 . \left(1-ΔT\left(λ2\right)\right) + Pvis 0 . \left(1-ΔL∗\right)$

Lors de la deuxième sous-étape « E2-2 » de commande de la deuxième étape « E2 », la puissance du rayonnement électromagnétique chauffant est commandée en fonction de la puissance corrigée « Ptc » calculée lors de la première sous-étape « E2-1 » pour chauffer le corps 14 des préformes 12 à la température de consigne en prenant en compte la teinte des préformes 12 et le facteur de transmission « T(λ2) » infrarouge des préformes 12 dans le domaine des infrarouges proches.

De préférence, mais pas obligatoirement, pour éviter que la puissance du rayonnement chauffant ne change de manière trop chaotique et rapide en fonction des différentes valeurs mesurées pour chaque préforme 12, la puissance corrigée « Ptc » est calculée en prenant en compte la mesure de la clarté pour plusieurs préformes 12 successive. Le nombre de préformes 12 est par exemple égale au nombre de préformes susceptibles d'être contenues simultanément dans la zone 42 de chauffage. Il s'agit ici d'une moyenne glissante qui est remise à jour à chaque nouvelle préforme 12 reçue dans la zone « Z » de mesure.

En variante applicable à tous les modes de réalisation décrits précédemment, la puissance corrigée peut aussi être calculée encore plus précisément en prenant en compte les paramètre a* et b* mesurés pour chaque préforme 12 afin de définir un facteur de correction qui dépendent encore plus précisément des différentes longueurs d'onde appartenant au domaine de la lumière visible. Une telle correction prendrait ainsi en compte non seulement la clarté de la paroi 16 de la préforme 12 mais aussi sa couleur.

## Revendications

1. Procédé de commande d'une station (30) de chauffage d'une installation (10) de fabrication de récipients (11) par formage, notamment par étirage-soufflage, de préformes (12) en matériau thermoplastique, les préformes (12) étant transportées le long d'un trajet (34) de production qui traverse une zone (42) de chauffage dans laquelle les préformes (12) sont exposées à un rayonnement électromagnétique chauffant à spectre continu, ledit spectre s'étendant au moins en partie dans le domaine de la lumière visible,
**caractérisé en ce que** le procédé comporte :
- une première étape (E1) de mesure du spectre (σ(λ1)) d'absorption d'une paroi (16) d'une préforme (12) dans le domaine de la lumière visible dans une zone (Z) de mesure traversée par le trajet (34) de production en amont de la zone (42) de chauffage ;
- une deuxième étape (E2) de commande de la puissance du rayonnement électromagnétique chauffant en fonction du spectre (σ(λ1)) d'absorption mesuré lors de la première étape pour chauffer le corps (14) des préformes à une température de consigne.

2. Procédé selon la revendication précédente, **caractérisé en ce que** la deuxième étape (E2) de commande comporte une première sous-étape (E2-1) de calcul d'une puissance corrigée (Ptc) du rayonnement électromagnétique chauffant en fonction du spectre (σ(λ1)) d'absorption mesuré lors de la première étape (E1), et une deuxième sous-étape (E2-2) de commande de la puissance du rayonnement électromagnétique chauffant à ladite puissance corrigée (Ptc) calculée lors de la première sous-étape (E2-1).

3. Procédé selon la revendication précédente, **caractérisé en ce que** lors de la première sous-étape (E2-1) de calcul, le spectre (σ(λ1)) d'absorption mesuré est utilisé pour calculer les paramètres de la paroi (16) de la préforme dans un espace chromatique déterminé équivalent à l'espace chromatique CIELAB comme défini par la norme ISO 11664-4:2019.

4. Procédé selon la revendication précédente, **caractérisé en ce que** la puissance corrigée (Ptc) est calculée lors de la première sous-étape (E2-1) au moins en fonction de la valeur d'un paramètre (p) représentatif de la luminance de la paroi (16) dans l'espace chromatique déterminé.

5. Procédé selon la revendication précédente, **caractérisé en ce que** la puissance corrigée (Ptc) est calculée en fonction d'un taux dudit paramètre (p) qui est calculé selon l'équation suivante : $Δ p = \frac{{p}_{0} - p}{{p}_{0}}$ dans laquelle *p*₀ représente une valeur de référence du paramètre et p représente le paramètre calculée à partie du spectre (σ(λ1)) d'absorption mesuré lors de la première étape (E1).

6. Procédé selon la revendication précédente, **caractérisé en ce que** la puissance corrigée (Ptc) est calculée en fonction de la proportion de la puissance (Pvis) du rayonnement électromagnétique chauffant s'étendant dans le domaine de la lumière visible.

7. Procédé selon l'une quelconque des revendications précédentes, **caractérisé en ce que** le rayonnement chauffant s'étend au moins en partie dans le domaine de l'infrarouge proche et **en ce qu'**il comporte une quatrième étape (E4) de mesure d'un facteur de transmission (T(λ2)) infrarouge d'une paroi (16) de ladite préforme (12) pour au moins une longueur d'onde (λ2) appartenant au domaine de l'infrarouge proche, cette quatrième étape (E4) étant réalisée préalablement à la première sous-étape (E2-1) de calcul.

8. Procédé selon la revendication précédente, **caractérisé en ce que** la puissance corrigée (Ptc) est calculée en fonction d'un taux de transmission (ΔT(λ2)) qui est calculé selon l'équation suivante : $Δ T \left(λ2\right) = \frac{{T}_{0} \left(λ2\right) - T \left(λ2\right)}{{T}_{0} \left(λ2\right)}$ dans laquelle T0(λ2) représente une valeur de facteur de transmission infrarouge de référence et T(λ2) représente le facteur de transmission infrarouge mesuré lors de la quatrième étape (E4).

9. Procédé selon la revendication précédente, **caractérisé en ce que** la puissance corrigée (Ptc) est calculée en fonction de la proportion de la puissance (Pnir) du rayonnement électromagnétique chauffant s'étendant dans le domaine de l'infrarouge proche.

10. Installation (10) pour la mise en œuvre du procédé selon l'une quelconque des revendications précédentes, l'installation comportant des moyens (36) de convoyage de préformes (12) en file le long d'un trajet (34) de production prédéterminé passant successivement à travers une zone (42) de chauffage d'un corps (14) des préformes (12) et à travers une station (32) de formage des préformes (12) en récipient (11), notamment par étirage-soufflage,
**caractérisé en ce que** l'installation comporte un dispositif (56) de mesure du spectre (σ(λ1)) d'absorption dans le domaine de la lumière visible d'au moins une paroi (16) des préformes (12) lors de leur passage dans une zone (Z) de mesure associée.

11. Installation (10) selon la revendication précédente, **caractérisée en ce que** le dispositif (56) de mesure du spectre (σ(λ1)) d'absorption comporte :
- une première source (58) lumineuse qui émet un premier faisceau (55) lumineux selon un spectre (σ0) continu qui s'étend au moins dans le domaine du visible,
- un spectromètre (62, 70) mesurant l'intensité (I) et la longueur d'onde (λ1) du premier faisceau (55) lumineux après avoir traversé au moins une épaisseur de la paroi (16) de la préforme (12).

12. Installation selon l'une quelconque des revendications 10 ou 11, **caractérisée en ce qu'**elle comporte un dispositif (64) de mesure du facteur de transmission (T(λ2)) infrarouge d'au moins une paroi (16) des préformes (12) lors de leur passage dans une zone (Z) de mesure associée.

13. Installation selon la revendication précédente, **caractérisée en ce que** le dispositif (64) de mesure d'une valeur représentative du facteur de transmission (T(λ2)) infrarouge comporte :
- une source (58, 68) lumineuse qui émet un faisceau (55, 66) lumineux présentant au moins une deuxième longueur d'onde (λ2) dans le domaine des infrarouges proches,
- un organe de mesure mesurant l'intensité (I) pour l'au moins une deuxième longueur d'onde (λ2) dudit faisceau (55, 66) lumineux après avoir traversé au moins une épaisseur de la paroi (16) de la préforme (12).

14. Installation (10) selon la revendication précédente, **caractérisée en ce que** le premier faisceau (55) lumineux émis par la première source (58) lumineuse présente un spectre continu qui comprend ladite au moins une deuxième longueur d'onde (λ2).

15. Installation (10) selon la revendication 13, **caractérisée en ce que** le dispositif (64) de mesure d'une valeur représentative du facteur de transmission (T(λ2)) infrarouge comporte une deuxième source (68) lumineuse qui est distincte de la première source (58) lumineuse et qui émet un deuxième faisceau (66) lumineux présentant au moins une deuxième longueur d'onde (λ2) dans le domaine des infrarouges proches.

16. Installation (10) selon la revendication précédente, **caractérisée en ce que** le premier faisceau (55) lumineux et le deuxième faisceau (66) lumineux traversent la paroi (16) de la préforme (12) à la même hauteur (h).

17. Installation (10) selon la revendication précédente, **caractérisée en ce que** le premier faisceau (55) lumineux et le deuxième faisceau (66) lumineux sont fusionnés en un faisceau (72) commun avant d'atteindre la préforme (12).

18. Installation (10) selon l'une quelconque des revendications 13 à 17, **caractérisée en ce que** la mesure du facteur de transmission (T(λ2)) infrarouge et la mesure du spectre (σ(λ1)) d'absorption sont réalisées simultanément en une même zone (Z) de mesure du trajet (34) de production.

19. Installation (10) selon l'une quelconque des revendications 13 à 18 prise en combinaison avec la revendication 11, **caractérisée en ce que** l'organe de mesure du dispositif (64) de mesure du facteur (T(λ2)) de transmission infrarouge et le spectromètre (62) du dispositif de mesure du spectre (σ(λ1)) d'absorption sont formés par un unique spectromètre (70) commun aux deux dispositifs (56, 64).

## Patentansprüche

1. Verfahren zur Steuerung einer Heizstation (30) einer Anlage (10) zur Herstellung von Behältern (11) durch Umformen, insbesondere im Streckblasverfahren, von Vorformlingen (12) aus thermoplastischem Material, wobei die Vorformlinge (12) entlang einer Produktionsstrecke (34) transportiert werden, die durch eine Heizzone (42) verläuft, in der die Vorformlinge (12) einer wärmeerzeugenden elektromagnetischen Strahlung mit kontinuierlichem Spektrum ausgesetzt sind, wobei sich dieses Spektrum zumindest teilweise im Bereich des sichtbaren Lichts erstreckt,
**dadurch gekennzeichnet, dass** das Verfahren Folgendes aufweist:
- einen ersten Schritt (E1) zum Messen des Absorptionsspektrums (σ(λ1)) einer Wand (16) eines Vorformlings (12) im Bereich des sichtbaren Lichts in einer Messzone (Z), die von der Produktionsstrecke (34) vor der Heizzone (42) durchlaufen wird;
- einen zweiten Schritt (E2) zum Steuern der Leistung der wärmeerzeugenden elektromagnetischen Strahlung in Abhängigkeit vom im ersten Schritt gemessenen Absorptionsspektrum (σ(λ1)), um den Körper (14) der Vorformlinge auf eine Solltemperatur zu erwärmen.

2. Verfahren nach dem vorhergehenden Anspruch, **dadurch gekennzeichnet, dass** der zweite Schritt (E2) zum Steuern einen ersten Teilschritt (E2-1) zum Berechnen einer korrigierten Leistung (PTC) der wärmeerzeugenden elektromagnetischen Strahlung in Abhängigkeit von dem im ersten Schritt (E1) gemessenen Absorptionsspektrum (σ(λ1)) sowie einen zweiten Teilschritt (E2-2) zum Regeln der Leistung der wärmeerzeugenden elektromagnetischen Strahlung auf die im ersten Teilschritt (E2-1) berechnete korrigierte Leistung (Ptc) aufweist.

3. Verfahren nach dem vorhergehenden Anspruch, **dadurch gekennzeichnet, dass** während des ersten Teilschritts (E2-1) das gemessene Absorptionsspektrum (σ(λ1)) verwendet wird, um die Parameter der Wand (16) des Vorformlings in einem bestimmten Farbraum zu berechnen, der dem CIELAB-Farbraum gemäß der Norm ISO 11664-4:2019 entspricht.

4. Verfahren nach dem vorhergehenden Anspruch, **dadurch gekennzeichnet, dass** die korrigierte Leistung (Ptc) im ersten Teilschritt (E2-1) zumindest in Abhängigkeit vom Wert eines Parameters (p) berechnet wird, der die Leuchtdichte der Wand (16) in dem festgelegten Farbraum repräsentiert.

5. Verfahren nach dem vorhergehenden Anspruch, **dadurch gekennzeichnet, dass** die korrigierte Leistung (Ptc) in Abhängigkeit von einem Wert des Parameters (p) berechnet wird, der gemäß der folgenden Gleichung berechnet wird: $Δp = \frac{{p}_{0} - p}{{p}_{0}}$ wobei p₀ einen Referenzwert des Parameters darstellt und p den Parameter darstellt, der anhand des im ersten Schritt (E1) gemessenen Absorptionsspektrums (σ(λ1)) berechnet wurde.

6. Verfahren nach dem vorhergehenden Anspruch, **dadurch gekennzeichnet, dass** die korrigierte Leistung (Ptc) in Abhängigkeit vom Anteil der Leistung (Pvis) der wärmeerzeugenden elektromagnetischen Strahlung berechnet wird, die sich im Bereich des sichtbaren Lichts erstreckt.

7. Verfahren nach einem der vorhergehenden Ansprüche, **dadurch gekennzeichnet, dass** sich die wärmeerzeugenden Strahlung zumindest teilweise im nahen Infrarotbereich erstreckt und dass es einen vierten Schritt (E4) zum Messen eines Infrarot-Transmissionsfaktors (T(λ2)) einer Wand (16) des Vorformlings (12) für mindestens eine Wellenlänge (λ2) aus dem nahen Infrarotbereich aufweist, wobei dieser vierte Schritt (E4) vor dem ersten Teilschritt (E2-1) zum Berechnen durchgeführt wird.

8. Verfahren nach dem vorhergehenden Anspruch, **dadurch gekennzeichnet, dass** die korrigierte Leistung (Ptc) in Abhängigkeit von einer Transmissionsrate (ΔT(λ2)) berechnet wird, die gemäß der folgenden Gleichung berechnet wird: $ΔT \left(λ2\right) = \frac{{T}_{0} \left(λ2\right) - ΔT \left(λ2\right)}{{T}_{0} \left(λ2\right)}$ wobei T0(λ2) einen Referenzwert für den Infrarot-Transmissionsfaktor darstellt und T(λ2) den im vierten Schritt (E4) gemessenen Infrarot-Transmissionsfaktor.

9. Verfahren nach dem vorhergehenden Anspruch, **dadurch gekennzeichnet, dass** die korrigierte Leistung (Ptc) in Abhängigkeit vom Anteil der Leistung (Pnir) der wärmeerzeugenden elektromagnetischen Strahlung berechnet wird, die sich im nahen Infrarotbereich erstreckt.

10. Anlage (10) zur Durchführung des Verfahrens nach einem der vorhergehenden Ansprüche, wobei die Anlage Mittel (36) zum Fördern von Vorformlingen (12) in einer Reihe entlang einer vorgegebenen Produktionsstrecke (34) aufweist, die nacheinander durch eine Zone (42) zum Erwärmen eines Körpers (14) der Vorformlinge (12) und durch eine Station (32) zum Formen der Vorformlinge (12) zu einem Behälter (11), insbesondere im Streckblasverfahren, verläuft,
**dadurch gekennzeichnet, dass** die Anlage eine Vorrichtung (56) zum Messen des Absorptionsspektrums (σ(λ1)) im Bereich des sichtbaren Lichts mindestens einer Wand (16) der Vorformlinge (12) während ihres Durchlaufs durch eine zugehörige Messzone (Z) aufweist.

11. Anlage (10) nach dem vorhergehenden Anspruch, **dadurch gekennzeichnet, dass** die Vorrichtung (56) zum Messen des Absorptionsspektrums ((σ(λ1)) Folgendes aufweist:
- eine erste Lichtquelle (58), die einen ersten Lichtstrahl (55) mit einem kontinuierlichen Spektrum (σ0) aussendet, das sich mindestens im sichtbaren Bereich erstreckt,
- ein Spektrometer (62, 70), das die Intensität (I) und die Wellenlänge (λ1) des ersten Lichtstrahls (55) misst, nachdem dieser mindestens eine Wandstärke (16) des Vorformlings (12) durchdrungen hat.

12. Anlage nach einem der Ansprüche 10 oder 11, **dadurch gekennzeichnet, dass** sie eine Vorrichtung (64) zum Messen des Infrarot-Transmissionsfaktors (T(λ2)) mindestens einer Wand (16) der Vorformlinge (12) während deren Durchlaufs durch eine zugehörige Messzone (Z) aufweist.

13. Anlage nach dem vorhergehenden Anspruch, **dadurch gekennzeichnet, dass** die Vorrichtung (64) zum Messen eines für den Infrarot-Transmissionsfaktor (T(λ2)) repräsentativen Werts Folgendes aufweist:
- eine Lichtquelle (58, 68), die einen Lichtstrahl (55, 66) aussendet, der mindestens eine zweite Wellenlänge (λ2) im nahen Infrarotbereich aufweist,
- eine Messeinrichtung, die die Intensität (I) für die mindestens eine zweite Wellenlänge (λ2) des Lichtstrahls (55, 66) nach Durchdringen mindestens einer Dicke der Wand (16) des Vorformlings (12) misst.

14. Anlage (10) nach dem vorhergehenden Anspruch, **dadurch gekennzeichnet, dass** der von der ersten Lichtquelle (58) emittierte erste Lichtstrahl (55) ein kontinuierliches Spektrum aufweist, das die mindestens eine zweite Wellenlänge (λ2) aufweist.

15. Anlage (10) nach Anspruch 13, **dadurch gekennzeichnet, dass** die Vorrichtung (64) zum Messen eines Wertes, der den Infrarot-Transmissionsfaktor (T(λ2)) repräsentiert, eine zweite Lichtquelle (68) aufweist, die sich von der ersten Lichtquelle (58) unterscheidet und einen zweiten Lichtstrahl (66) aussendet, der mindestens eine zweite Wellenlänge (λ2) im nahen Infrarotbereich aufweist.

16. Anlage (10) nach dem vorhergehenden Anspruch, **dadurch gekennzeichnet, dass** der erste Lichtstrahl (55) und der zweite Lichtstrahl (66) die Wand (16) des Vorformlings (12) auf gleicher Höhe (h) durchdringen.

17. Anlage (10) nach dem vorhergehenden Anspruch, **dadurch gekennzeichnet, dass** der erste Lichtstrahl (55) und der zweite Lichtstrahl (66) vor Erreichen des Vorformlings (12) zu einem gemeinsamen Lichtstrahl (72) zusammengeführt werden.

18. Anlage (10) nach einem der Ansprüche 13 bis 17, **dadurch gekennzeichnet, dass** die Messung des Infrarot-Transmissionsfaktors (T(λ2)) und die Messung des Absorptionsspektrums (σ(λ1)) gleichzeitig in ein und derselben Messzone (Z) der Produktionsstrecke (34) durchgeführt werden.

19. Anlage (10) nach einem der Ansprüche 13 bis 18 in Kombination mit Anspruch 11, **dadurch gekennzeichnet, dass** die Messeinrichtung der Vorrichtung (64) zum Messen des Infrarot-Transmissionsfaktors (T(λ2)) und das Spektrometer (62) der Vorrichtung zum Messen des Absorptionsspektrums (σ(λ1)) durch ein einziges, beiden Vorrichtungen (56, 64) gemeinsames Spektrometer (70) gebildet werden.

## Claims

1. Method for controlling a heating station (30) of a facility (10) for manufacturing containers (11) by shaping, notably by stretch-blowing, preforms (12) made of thermoplastic material, the preforms (12) being conveyed along a production path (34) that passes through a heating area (42) in which the preforms (12) are exposed to continuous spectrum heating electromagnetic radiation, said spectrum at least partly extending into the visible light range,
**characterized in that** the method comprises:
- a first step (E1) of measuring the absorption spectrum (σ(λ1)) of a wall (16) of a preform (12) in the visible light range in a measurement area (Z) traversed by the production path (34) upstream of the heating area (42);
- a second step (E2) of controlling the power of the heating electromagnetic radiation as a function of the absorption spectrum (σ(λ1)) measured during the first step for heating the body (14) of the preforms to a setpoint temperature.

2. Method according to the preceding claim, **characterized in that** the second control step (E2) comprises a first sub-step (E2-1) of computing a corrected power (Ptc) of the heating electromagnetic radiation as a function of the absorption spectrum (σ(λ1)) measured during the first step (E1), and a second sub-step (E2-2) of controlling the power of the heating electromagnetic radiation at said corrected power (Ptc) computed during the first sub-step (E2-1).

3. Method according to the preceding claim, **characterized in that**, during the first computation sub-step (E2-1), the measured absorption spectrum (σ(λ1)) is used to compute the parameters of the wall (16) of the preform in a determined colour space equivalent to the CIELAB colour space as defined by ISO standard 11664-4:2019.

4. Method according to the preceding claim, **characterized in that** the corrected power (Ptc) is computed during the first sub-step (E2-1) at least as a function of the value of a parameter (p) representing the luminance of the wall (16) in the determined colour space.

5. Method according to the preceding claim, **characterized in that** the corrected power (Ptc) is computed as a function of a rate of said parameter (p) that is computed according to the following equation: $Δp = \frac{{p}_{0} - p}{{p}_{0}}$ where p₀ represents a reference value of the parameter and p represents the parameter computed based on the absorption spectrum (σ(λ1)) measured during the first step (E1).

6. Method according to the preceding claim, **characterized in that** the corrected power (Ptc) is computed as a function of the proportion of the power (Pvis) of the heating electromagnetic radiation extending into the visible light range.

7. Method according to any one of the preceding claims, **characterized in that** the heating radiation at least partly extends into the near infrared band and **in that** it comprises a fourth step (E4) of measuring an infrared transmittance (T(λ2)) of a wall (16) of said preform (12) for at least one wavelength (λ2) belonging to the near infrared band, with this fourth step (E4) being carried out prior to the first computation sub-step (E2-1).

8. Method according to the preceding claim, **characterized in that** the corrected power (Ptc) is computed as a function of a transmission rate (ΔT(λ2)) that is computed according to the following equation: $ΔT \left(λ2\right) = \frac{{T}_{0} \left(λ2\right) - T \left(λ2\right)}{{T}_{0} \left(λ2\right)}$ where T0(λ2) represents a reference infrared transmittance value and T(λ2) represents the infrared transmittance measured during the fourth step (E4).

9. Method according to the preceding claim, **characterized in that** the corrected power (Ptc) is computed as a function of the proportion of the power (Pnir) of the heating electromagnetic radiation extending into the near infrared band.

10. Facility (10) for implementing the method according to any one of the preceding claims, the facility comprising means (36) for conveying preforms (12) in a line along a predetermined production path (34) successively passing through an area (42) for heating a body (14) of the preforms (12) and through a station (32) for shaping the preforms (12) into a container (11), notably by stretch-blowing,
**characterized in that** the facility comprises a device (56) for measuring the absorption spectrum (σ(λ1)) in the visible light range of at least one wall (16) of the preforms (12) when they pass through an associated measurement area (Z).

11. Facility (10) according to the preceding claim, **characterized in that** the device (56) for measuring the absorption spectrum (σ(λ1)) comprises:
- a first light source (58) that emits a first light beam (55) according to a continuous spectrum (σ0) that at least extends into the visible range;
- a spectrometer (62, 70) measuring the intensity (I) and the wavelength (λ1) of the first light beam (55) after passing through at least one thickness of the wall (16) of the preform (12).

12. Facility according to any one of Claims 10 or 11, **characterized in that** it comprises a device (64) for measuring the infrared transmittance (T(λ2)) of at least one wall (16) of the preforms (12) when they pass through an associated measurement area (Z).

13. Facility according to the preceding claim, **characterized in that** the device (64) for measuring a value representing the infrared transmittance (T(λ2)) comprises:
- a light source (58, 68) that emits a light beam (55, 66) having at least one second wavelength (λ2) in the near infrared band;
- a measurement component measuring the intensity (I) for the at least one second wavelength (λ2) of said light beam (55, 66) after passing through at least one thickness of the wall (16) of the preform (12).

14. Facility (10) according to the preceding claim, **characterized in that** the first light beam (55) emitted by the first light source (58) has a continuous spectrum that comprises said at least one second wavelength (λ2).

15. Facility (10) according to Claim 13, **characterized in that** the device (64) for measuring a value representing the infrared transmittance (T(λ2)) comprises a second light source (68) that is distinct from the first light source (58) and that emits a second light beam (66) having at least one second wavelength (λ2) in the near infrared band.

16. Facility (10) according to the preceding claim, **characterized in that** the first light beam (55) and the second light beam (66) pass through the wall (16) of the preform (12) at the same height (h).

17. Facility (10) according to the preceding claim, **characterized in that** the first light beam (55) and the second light beam (66) are merged into a common beam (72) before reaching the preform (12).

18. Facility (10) according to any one of Claims 13 to 17, **characterized in that** the measurement of the infrared transmittance (T(λ2)) and the measurement of the absorption spectrum (σ(λ1)) are carried out simultaneously in the same measurement area (Z) of the production path (34).

19. Facility (10) according to any one of Claims 13 to 18 in combination with Claim 11, **characterized in that** the measurement component of the device (64) for measuring the infrared transmittance (T(λ2)) and the spectrometer (62) of the device for measuring the absorption spectrum (σ(λ1)) are formed by a single spectrometer (70) common to the two devices (56, 64).
